# EUROPÄISCHE PATENTSCHRIFT

(11) **EP 4 039 131 B1**
(45) Veröffentlichungstag und Bekanntmachung des Hinweises auf die Patenterteilung: **04.01.2023**
(21) Anmeldenummer: 22020033.1
(22) Anmeldetag: 03.02.2022
(51) Int. Cl.: A47B 47/03, F16B 12/40, A47B 47/02, A47B 96/20

(54) **REGALSYSTEM**
SHELVING SYSTEM
SYSTÈME DE RAYONNAGE

(30) Priorität: 09.02.2021 DE 202021100626 U
(43) Veröffentlichungstag der Anmeldung: 10.08.2022
(73) Patentinhaber: Concept-s Ladenbau und Objektdesign GmbH, 73614 Schorndorf (DE)
(72) Erfinder: Schroll, Lukas, 73614 Schorndorf (DE)
(74) Vertreter: Müller, Gottfried

(56) Entgegenhaltungen:
- BE-A- 543 635
- BE-A- 887 632
- DE-U1- 29 601 648
- GB-A- 2 168 448

## Beschreibung

Die Erfindung bezieht sich auf ein Regalsystem mit Streben und mit Steckzapfen zum Verbinden der Streben.

Bekannte Regalsysteme, die im Industriebereich oder im Wohnbereich verwendet werden, umfassen Streben oder Profilrohre, die über geeignete Befestigungsmaßnahmen, vorzugsweise über Schrauben miteinander verbunden werden. Hierdurch ist es möglich, horizontal und vertikal verlaufende Profile zu einem Regalsystem zusammenzusetzen. Die horizontalen Profile können Träger von einsetzbaren Fachböden sein. Üblicherweise steht bei derartigen Regalsystemen die Erfüllung technischer Anforderungen wie Stabilität, Standsicherheit und Anpassbarkeit im Vordergrund.

In der DE 10 2017 130 758 A1 wird ein Untergestell für Möbel beschrieben, das ein Fachwerk aus Hohlprofilen aufweist, die durch Knoten miteinander verbunden sind. Mindestens eines der Hohlprofile endet an einem der Knoten. In das Ende des Hohlprofils ist ein Verschlussstück passend eingesteckt, das durch einen eingeschraubten Gewindebolzen gehalten ist, der durch eine Wand des Hohlprofils nach außen ragt. Auf den Gewindebolzen ein Verbindungskloben aufgeschraubt, in den auf einer Seite eine Spannschraube eingeschraubt ist, deren Kopf in dem Verbindungskloben versenkbar ist. Auf den Verbindungskloben ist ein Ende eines weiteren Hohlprofils aufgesteckt ist, das eine Öffnung aufweist, die mit der Spannschraube fluchtet.

Die DE 299 19 853 U1 offenbart ein Kombinationsregal mit einem Gestell mit zwei rechteckigen offenen Rahmen sowie vier Stützrohren, die die rechteckigen offenen Rahmen an ihren vier Ecken miteinander verbinden. Die rechteckigen offenen Rahmen weisen in den vier Ecken jeweils vier vertikal fluchtende Zapfen auf. Die Stützrohre sind jeweils an den beiden gegenüberliegenden Enden auf die vertikalen Zapfen der rechteckigen offenen Rahmen aufgesteckt.

Die DE 296 01 648 U1 zeigt einen Regalaufbau zur liegenden und hängenden Präsentation von Waren mit zwei rahmenartigen Seitenteilen, bestehend aus zwei zueinander parallel beabstandeten Vertikalstreben aus Vierkanthohlprofil, zumindest einer als Querverbindung wirkenden Bodensprosse, an den Vertikalstreben vorgesehenen Lochrastern zum Einsetzen von stützenden Tragstangen und Querträgern und mit sternförmigen Steckverbindern zur Halterung zusammenstoßender Regalbauteile. Jeweils zwischen zwei benachbarten Seitenteilen werden an die Bodensprossen vormontierte Abstandsrahmen angebracht, wobei für den oberen Abschluss eines Regalfelds ein Dachrahmen vorgesehen ist. Der Zusammenhalt des Dachrahmens erfolgt mittels der Steckverbinder, die zugleich dazu dienen, den Dachrahmen an den oberen Enden der Vertikalstreben lösbar zu befestigen.

Die DE 203 19 373 U1 offenbart ein Tragwerksystem aus lösbar miteinander verbindbaren Längs- und Querholmen rechteckigen Querschnitts. Das Tragwerksystem weist Knotenelemente auf sowie in die Knotenelemente einschraubbare Adapterschrauben, wobei die Knotenelemente innerhalb der Längsholme liegen, in die durch eine Durchgangsbohrung in der Längsholmwand eine Adapterschraube einschraubbar ist.

Zum weiteren Stand der Technik, der zum technologischen Hintergrund zählt, wird auf die Druckschriften BE 887 632 A, BE 543 635 A und GB 2 168 448 A verwiesen.

Der Erfindung liegt die Aufgabe zugrunde, ein in einfacher Weise aufzubauendes Regalsystem zu schaffen, das flexibel an verschiedenen Einsatzanforderungen angepasst werden kann und sich durch ein ästhetisches Erscheinungsbild auszeichnet.

Diese Aufgabe wird erfindungsgemäß mit den Merkmalen des Anspruches 1 gelöst. Die Unteransprüche geben zweckmäßige Weiterbildungen an.

Das erfindungsgemäße Regalsystem weist verschiedene Streben auf, die mithilfe von Steckzapfen verbunden werden können. Zumindest ein Steckzapfen ist an einem Ende, an beiden Enden und/oder mit Abstand zu den Enden einer ersten Strebe angeordnet und senkrecht zur Längsachse dieser ersten Strebe ausgerichtet; diese Strebe bildet eine Trägerstrebe für Steckzapfen. Mindestens eine zweite Strebe ist als eine Hohlstrebe ausgebildet, wobei der Steckzapfen, der an der Trägerstrebe angeordnet ist, stirnseitig in die zweite Strebe hineinragt.

Ein in dieser Weise aufgebautes Regalsystem weist verschiedene Vorteile auf. Zum einen lässt sich das Regalsystem in einfacher Weise aufbauen, da es sich um ein Stecksystem handelt, mit dem die Streben miteinander verbunden werden. Der Aufbau des Regalsystems kann vorteilhafterweise ohne Werkzeug durchgeführt werden.

Zum andern handelt es sich um ein flexibel einsetzbares und erweiterbares Regalsystem. Es können prinzipiell beliebig viele Streben mithilfe der Steckzapfen verbunden werden. Die Verbindung kann sowohl zwischen zwei horizontal angeordneten, winklig zueinander ausgerichteten Streben als auch zwischen zwei in einer Vertikalebene liegenden, ebenfalls winklig zueinander ausgerichteten Streben durchgeführt werden.

Gegebenenfalls kann ein bestehendes erfindungsgemäßes Regalsystem nachträglich erweitert werden.

Ein weiterer Vorteil liegt in dem ansprechenden Design, das mit dem Regalsystem verwirklicht werden kann. Da die Steckzapfen in die Stirnseite einer benachbarten Hohlstrebe hineinragen, sind die Steckzapfen im fertig aufgebauten Regalsystem von außen nicht erkennbar. Im optischen Erscheinungsbild besteht das Regalsystem ausschließlich aus Streben, die horizontal und vertikal angeordnet sind, wobei in den Verbindungsbereichen aneinandergrenzender Streben kein von außen erkennbares Verbindungssystem vorhanden ist. Dementsprechend besitzt das Regalsystem eine schlanke und aufgeräumte Optik.

Gemäß einer vorteilhaften Ausführung erfolgt die Verbindung zwischen dem Steckzapfen und der Trägerstrebe, an der der Steckzapfen rechtwinklig übersteht, mithilfe eines Gewindestiftes, der sowohl in ein Innengewinde im Steckzapfen als auch in ein Gewinde in der Trägerstrebe einschraubbar ist. Es genügt, in die Trägerstrebe eine Bohrung mit Innengewinde einzubringen, in die der Gewindestift einschraubbar ist. Auf den über die Trägerstrebe hinausragenden Abschnitt des Gewindestiftes kann der Steckzapfen aufgeschraubt werden, so dass insgesamt der Steckzapfen über eine Schraubverbindung mit der Trägerstrebe verbunden ist. Diese Schraubverbindung kann insbesondere manuell durchgeführt werden. Anschließend kann die zweite Strebe mit ihrer offenen Stirnseite auf den Steckzapfen aufgeschoben werden.

Gemäß weiterer vorteilhafter Ausführung umfasst der Steckzapfen eine in die zweite Strebe einführbare Kunststoffhülse und einen Gewindestift oder eine Schraube, wobei der Gewindestift bzw. die Schraube in die Kunststoffhülse eingeschraubt oder einschraubbar ist. Es ist insbesondere zweckmäßig, dass der Gewindestift bzw. die Schraube an einer Stirnseite aus der Kunststoffhülse herausragt, so dass der herausragende Abschnitt mit der Trägerstrebe verschraubt werden kann. Die Kunststoffhülse kann in die offene Stirnseite der zweiten Strebe eingeführt werden. Das Kunststoffmaterial der Kunststoffhülse ermöglicht ein einfaches Einführen in die offene Stirnseite der zweiten Strebe ohne Risiko eines Verkantens oder Verklemmens.

Es kann gegebenenfalls zweckmäßig sein, dass der Steckzapfen spielfrei in die zweite Strebe eingeführt ist, gegebenenfalls mit Reibung, um eine sichere Verbindung von Steckzapfen und zweiter Strebe zu gewährleisten. Gegebenenfalls befindet sich an dem Steckzapfen eine umlaufende Nut, in die ein Dichtring eingesetzt ist, welcher über die Mantelfläche des Steckzapfens radial übersteht und die Reibung zur Innenwand der aufnehmenden, zweiten Strebe sicherstellt.

Erfindungsgemäß ist die zweite Strebe, die als Hohlstrebe ausgeführt ist und in deren Stirnseite ein Steckzapfen axial in Richtung der Längsachse der zweiten Strebe einführbar ist, im Bereich ihrer offenen Stirnseite mit einer dritten Strebe verbunden, die rechtwinklig zur zweiten Strebe steht. Die Verbindung zwischen zweiter und dritter Strebe erfolgt über eine einteilige Ausführung von zweiter und dritter Strebe. Dieses wird erreicht durch eine im Ausgangszustand durchgehende und geradlinige Strebe, die als Hohlstrebe ausgeführt ist, teilweise aufzutrennen, insbesondere durch Ansägen, und anschließend zu einem rechten Winkel zu biegen, so dass die beiden entstehenden Streben über einen gemeinsamen Wandabschnitt miteinander verbunden sind. Zugleich sind die offenen Stirnseiten der Streben einander benachbart und stehen in einem 90°-Winkel zueinander. Im Regalsystem ist in eine der Stirnseiten ein Steckzapfen, der an der Trägerstrebe angeordnet ist, eingeführt. Die den Steckzapfen tragende Trägerstrebe sitzt bündig in dem Eckbereich zwischen zweiter und dritter Strebe auf und füllt diesen Eckbereich aus, wodurch der Eindruck einer aufgeräumten Optik ohne von außen erkennbare Steckzapfen unterstrichen wird.

Gemäß noch einer weiteren vorteilhaften Ausführung weist das Regalsystem mehrere übereinanderliegende horizontale Ebenen auf, die jeweils durch horizontal verlaufende Streben gekennzeichnet sind. Ein Teil der Streben in der untersten Ebene sind Bestandteil eines umlaufend geschlossenen, rechteckförmigen Rahmens, der in einer Vertikalebene steht. Auf diesen umlaufend geschlossenen, rechteckförmigen Rahmen sind weitere Streben aufsetzbar und verbindbar, die Teil eines offenen, U-förmig ausgebildeten Rahmens sind, welcher sich ebenfalls in einer Vertikalebene befindet. Auf diese Weise ist es möglich, nach Wahl des Anwenders eine Mehrzahl von übereinanderliegenden horizontalen Arbeitsebenen zu schaffen, die beispielsweise jeweils einen Fachboden aufnehmen, wobei ab der zweiten Ebene - vom Boden aus gesehen - jeweils U-förmige offene Rahmen aufgesetzt werden und mithilfe von Steckzapfen verbunden werden. Diese Steckzapfen befinden sich an horizontal verlaufenden Streben, die zwischen zwei oder mehr parallel stehenden, vertikalen Rahmen angeordnet und mit diesen über Steckzapfen verbunden sind.

Ein U-förmiger, offener Rahmen kann aus einer durchgehenden, geradlinigen Strebe durch Auftrennen an zwei beabstandeten Positionen und Biegen um jeweils 90°hergestellt werden. Ein umlaufend geschlossener Rahmen kann durch dreimaliges Auftrennen und Biegen um jeweils 90° einer durchgehenden Strebe gefertigt werden, wobei die einander zugewandten offenen Enden der Streben durch geeignete Maßnahmen miteinander verbunden werden, insbesondere durch Schweißen.

Gemäß noch einer weiteren vorteilhaften Ausführung sind sämtliche Streben gleichartig ausgebildet, insbesondere als Hohlstreben. In Betracht kommen beispielsweise Vierkantstreben mit einem rechteckförmigen Querschnittsprofil. Möglich sind aber auch hiervon abweichende Querschnittsprofile, beispielsweise runde Querschnittsprofile für die Streben.

Vierkantstreben vorzusehen hat den Vorteil, dass der Eckbereich zwischen zwei angrenzenden Streben von der weiteren Strebe - in der Regel die Trägerstrebe mit den Steckzapfen - vollständig ausgefüllt werden kann.

Gemäß noch einer weiteren vorteilhaften Ausführung sind ein Teil oder sämtliche Streben aus Stahl gefertigt. Diese Ausführung hat den Vorteil, dass beim teilweisen Auftrennen und Umbiegen über die verbleibende Verbindung zwischen den benachbarten Streben eine ausreichend hohe Festigkeit gewährleistet ist.

Alternativ sind auch Streben aus anderen Materialien möglich, beispielsweise Aluminiumstreben.

Gemäß weiterer vorteilhafter Ausführung erfolgt die Verbindung im Regalsystem ausschließlich über die Steckzapfen, soweit die Streben nicht einteilig oder durch Verschweißen miteinander verbunden sind. Diese Ausführung hat den Vorteil, dass auf sonstige Verbindungsmaßnahmen bei der Erstellung des Regalsystems verzichtet werden kann.

Gemäß noch einer weiteren vorteilhaften Ausführung weist die Trägerstrebe Steckzapfen auf, die sich in unterschiedliche Richtungen erstrecken. Zwei Steckzapfen an einer gemeinsamen Trägerstrebe erstrecken sich beispielsweise in diametral gegenüberliegende Richtungen. Es kann beispielsweise zweckmäßig sein, dass sich an gleicher axialer Position der Trägerstrebe zwei gegenüberliegende Steckzapfen befinden, mit denen jeweils eine Verbindung mit je einer weiteren Strebe realisiert werden kann.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Darstellung ein erfindungsgemäßes Regalsystem mit einer Mehrzahl horizontal und vertikal verlaufender Streben,
- Fig. 2: der Ausschnitt "L" aus Fig. 1,
- Fig. 3: der Ausschnitt "K" aus Fig. 1,
- Fig. 4: der Ausschnitt "I" aus Fig. 1 in transparenter Darstellung,
- Fig. 5: der Ausschnitt "J" aus Fig. 1,
- Fig. 6: in Explosionsdarstellung die Verbindung zwischen benachbarten Streben mithilfe von Steckzapfen,
- Fig. 7: einen Schnitt aus dem Bodenbereich zwischen benachbarten Streben,
- Fig. 8: in perspektivischer Explosionsdarstellung ein erfindungsgemäßes Regalsystem,
- Fig. 9: einen Ausschnitt aus der Seitenansicht des Regalsystems gemäß Fig. 8,
- Fig. 10: in perspektivischer Einzeldarstellung ein Bodenstützelement und eine Strebe mit Steckzapfen,
- Fig. 11: zwei rechtwinklig zueinanderstehende Streben, die durch teilweises Auftrennen und Biegen einer durchgehenden Strebe gefertigt sind,
- Fig. 12: eine Strebe mit zwei sich zu entgegengesetzten Seiten erstreckenden Steckzapfen,
- Fig. 13: in perspektivischer Ansicht das Regalsystem im zusammengebauten Zustand,
- Fig. 14: ein erfindungsgemäßes Regalsystem in einer weiteren Ausführung,
- Fig. 15: ein erfindungsgemäßes Regalsystem in noch einer weiteren Ausführung,
- Fig. 16: in Explosionsdarstellung ein erfindungsgemäßes Regalsystem mit Steckzapfen in einer weiteren Ausführung,
- Fig. 17: der in eine Strebe einzuschraubende Steckzapfen aus Fig. 16 in Explosionsdarstellung,
- Fig. 18: der mit der Strebe verschraubte Steckzapfen aus Fig. 16 im Längsschnitt,
- Fig. 19: der mit der Strebe verschraubte Steckzapfen aus Fig. 16 in perspektivischer Ansicht,
- Fig. 20: ein erfindungsgemäßes Regalsystem in noch einer weiteren Ausführung.

In den Figuren sind gleiche Bauteile mit gleichen Bezugszeichen versehen.

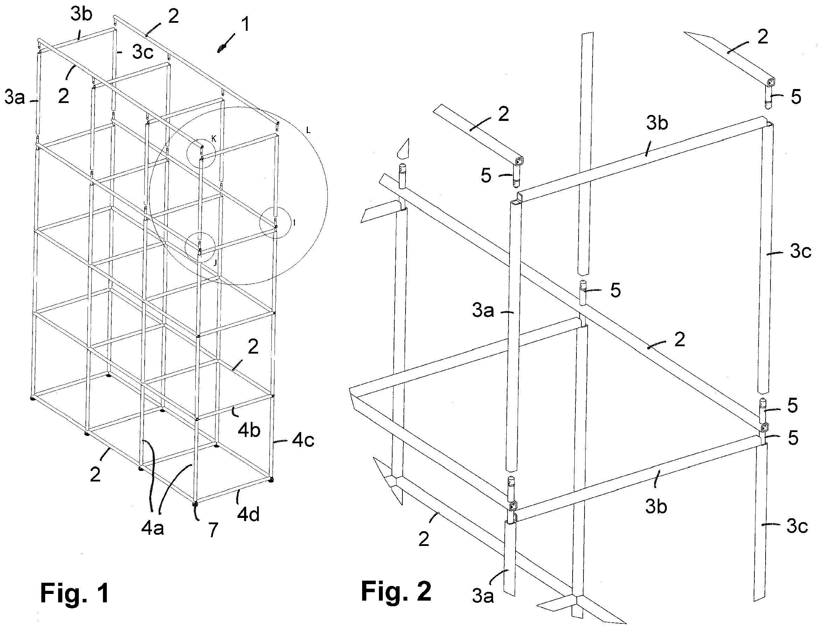

In den Fig. 1 bis 13 ist ein erstes Ausführungsbeispiel eines erfindungsgemäßes Regalsystems 1 dargestellt, das sich aus einer Vielzahl von horizontalen und vertikalen Streben 2, 3a bis 3c und 4a bis 4d zusammensetzt. Die Streben sind, soweit sie nicht einteilig verbunden sind, ausschließlich über Steckzapfen 5 miteinander verbunden. Sämtliche Streben sind als Hohlstreben ausgeführt und außerdem als Vierkantstreben, sie weisen entsprechend eine Vierkant-Querschnittsform auf. Die Streben sind im Querschnitt mit gleicher Breite und Höhe ausgebildet, sie können sich aber in der Länge unterscheiden.

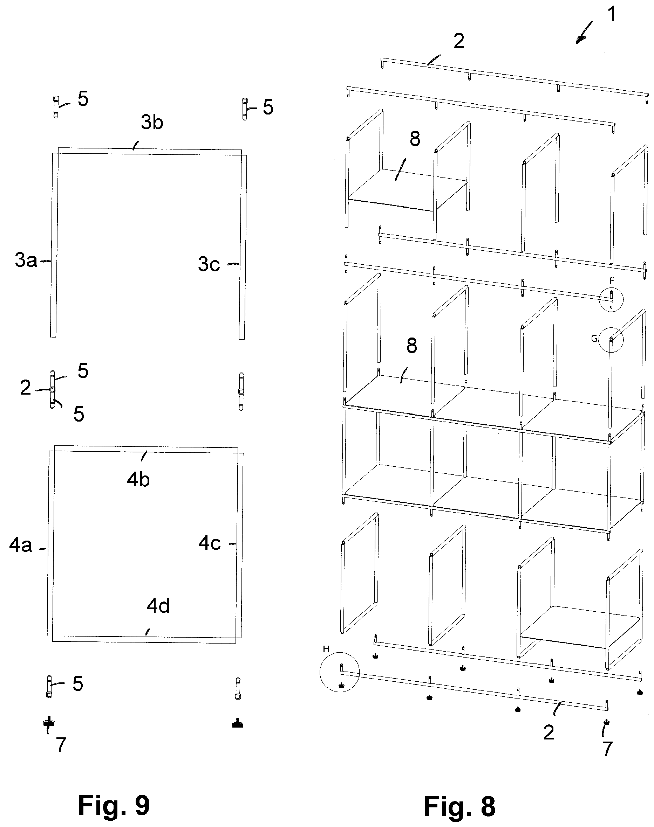

Unmittelbar dem Boden zugewandt weist das Regalsystem 1 in jeweils einer Vertikalebene angeordnete, umlaufend geschlossene, rechteckförmige Rahmen auf, die durch insgesamt vier gleich lange Streben 4a, 4b, 4c und 4d gebildet sind. Diese vier Streben hängen zusammen (Fig. 9) und werden aus einer einzigen, durchgehenden und im Ausgangszustand geradlinigen Strebe gebildet, indem diese Strebe an drei Stellen teilweise aufgetrennt wird, vorzugsweise durch Sägen, und anschließend im Bereich der Auftrennung um 90°umgebogen wird. Hierdurch entstehen die Einzelstreben 4a bis 4d, wobei die einander zugewandten Stirnseiten der ersten und der letzten Strebe vorzugsweise durch Schweißen miteinander verbunden werden, um den umlaufend geschlossenen Rahmen zu erhalten. In jedem Eckbereich sind aneinandergrenzende Streben an der nicht aufgetrennten Seite über einen gemeinsamen Wandabschnitt einteilig miteinander verbunden. Der Eckbereich dient zur Aufnahme einer horizontalen Trägerstrebe 2, die Träger von Steckzapfen 5 ist.

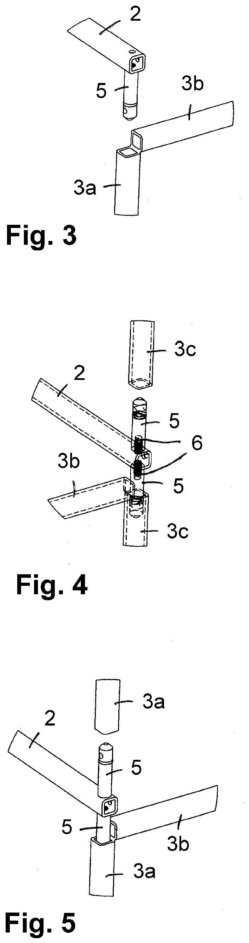

Die Steckzapfen 5 befinden sich benachbart zu den stirnseitigen Enden und zusätzlich auch mit Abstand zu den Enden jeder Trägerstrebe 2, wobei die Steckzapfen 5 in einem rechten Winkel gegenüber der Strebenlängsachse der Trägerstrebe 2 abgewinkelt sind. Jeder Steckzapfen 5 ist mithilfe eines Gewindestiftes 6 (Fig. 4, 6, 7) mit der jeweiligen Trägerstrebe 2 verschraubt. Zu diesem Zweck sind benachbart zur Stirnseite in die Wandungen der Trägerstrebe 2 Bohrungen mit einem Innengewinde eingebracht, in das die Gewindestifte 6 einschraubbar sind. Die Steckzapfen 5 weisen eine Bohrung auf mit einem Innengewinde, in das die Gewindestifte 6 ebenfalls einschraubbar sind.

Zur Verbindung einer horizontalen Trägerstrebe 2 mit Streben 3 bzw. 4 werden die Steckzapfen 5 in die offene Stirnseite einer Strebe 3a, 3c bzw. 4a, 4c eingesteckt. Der Endabschnitt der horizontalen Trägerstrebe 2 liegt im Eckbereich zwischen den angrenzenden Streben 3a, 3b bzw. 3b, 3c etc. Aufgrund der gleichen Querschnittsform und -größe füllt die Trägerstrebe 2 den Eckbereich vollständig und bündig aus, so dass im montierten Zustand die Steckzapfen 5 von außen nicht sichtbar sind.

Nur die horizontalen Streben 2 bilden jeweils Trägerstreben, die Träger der Steckzapfen 5 sind. Der U-förmige Rahmen, der in einer Vertikalebene liegt und die drei zusammenhängenden Streben 3a, 3b, 3c umfasst, ist dagegen nicht Träger von Steckzapfen 5. Auch der geschlossene, rechteckförmige Rahmen mit den vier Streben 4a bis 4d ist nicht Träger von Steckzapfen 5.

In einer alternativen Ausführung ist es aber denkbar, dass eine oder mehrere Streben entweder des U-förmigen Rahmens mit den Streben 3a bis 3c oder des rechteckförmigen, geschlossenen Rahmens 4a bis 4d auch Träger eines Zapfens 5 ist.

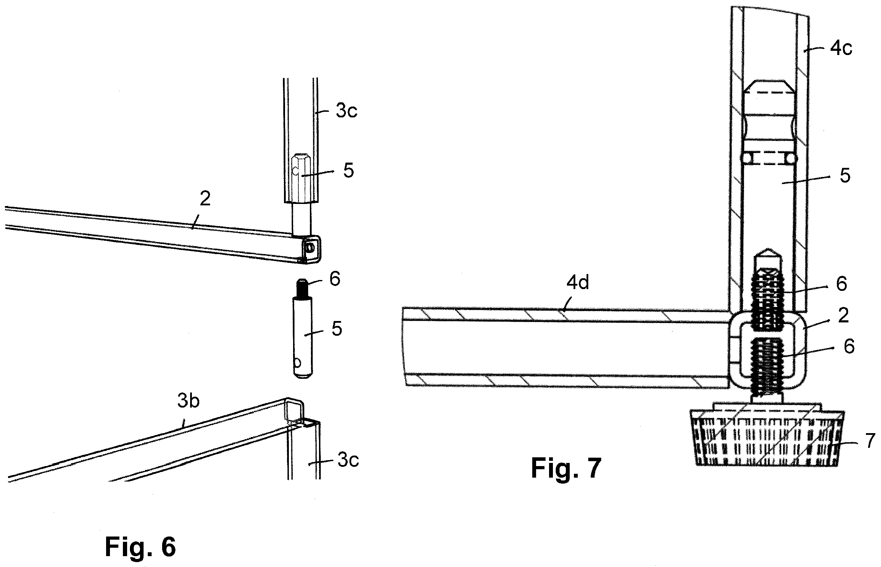

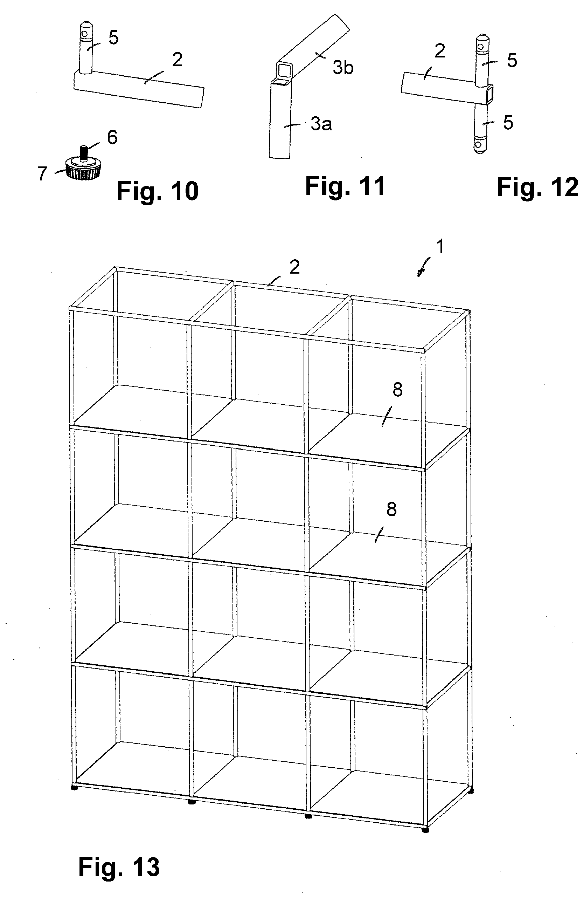

Die bodennah verlaufende horizontale Trägerstrebe 2 weist auf ihrer Unterseite Bodenstützelemente 7 auf (im Detail in den Fig. 7 und 10 dargestellt), wobei jedes Bodenstützelement 7 sich axial in gleicher Höhe, jedoch gegenüberliegend zu einem Steckzapfen 5 befindet und ebenso wie die Steckzapfen 5 mithilfe eines Gewindestiftes 6 mit der horizontalen Strebe 2 verschraubt ist.

Zwischen den horizontal und vertikal verlaufenden Streben 2, 3, 4 können sich verschiedenartige Komponenten befinden. Im Ausführungsbeispiel sind, wie den Fig. 8 und 13 zu entnehmen ist, Fachböden 8 eingesetzt, auf denen Gegenstände abgelegt werden können. Die Fachböden 8 werden von horizontal verlaufenden Streben getragen.

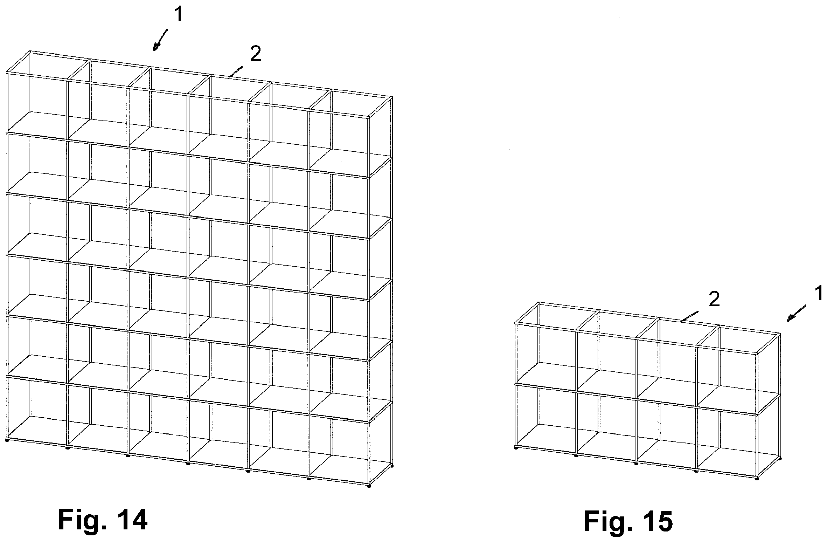

Die Fig. 13, 14 und 15 zeigen verschiedene Ausführungsvarianten jeweils eines Regalsystems 1, die sich in der Höhe und der Breite unterscheiden. Über eine entsprechende Wahl der Länge der horizontalen Trägerstreben 2, der Anzahl parallel und beabstandeter rechteckförmig geschlossener Rahmen mit jeweils vier Streben 4 des sowie der Anzahl an übereinander anzuordnenden, U-förmigen Rahmen mit jeweils drei Streben 3 kann die Höhe und die Breite jedes Regalsystems 1 beeinflusst werden. Gemäß Fig. 13 weist das Regalsystem 1 in der Breite drei nebeneinanderliegende und vier übereinanderliegende Fächer auf. Im Ausführungsbeispiel gemäß Fig. 14 weist das Regalsystem 1 sechs nebeneinanderliegende und sechs übereinanderliegende Fächer auf, im Ausführungsbeispiel gemäß Fig. 15 vier nebeneinanderliegende und zwei übereinanderliegende Fächer.

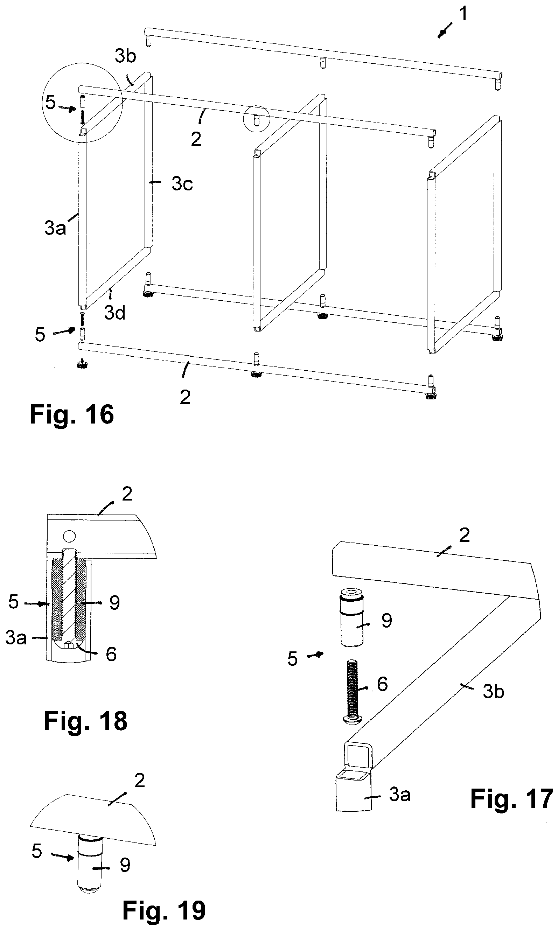

In den Fig. 16 bis 19 ist ein erfindungsgemäßes Regalsystem 1 mit Steckzapfen 5 in einer Ausführungsvariante dargestellt. Die Steckzapfen 5 umfassen eine in die Stirnseite der Strebe 3a einführbare, hohlzylindrische Kunststoffhülse 9 sowie eine Schraube 6, die in ein Innengewinde der Kunststoffhülse 9 eingeschraubt ist. Der Kopf der Schraube 6 liegt an einer Stirnseite der Kunststoffhülse 9 an, das gegenüberliegende Schraubenende ragt über die gegenüberliegende Stirnseite der Kunststoffhülse 9 hinaus und ist mit der Trägerstrebe 2 verschraubt. Der Außendurchmesser der Kunststoffhülse 9 entspricht im Wesentlichen dem Innendurchmesser der Strebe 3a, wobei gegebenenfalls ein leichtes Übermaß der Kunststoffhülse 9 vorteilhaft sein kann, so dass die Kunststoffhülse 9 mit Reibung in den innenliegenden Hohlraum der Strebe eingeführt ist. Der Außendurchmesser des Schraubenkopfes ist etwas kleiner als der Innendurchmesser der Kunststoffhülse 9, so dass der Schraubenkopf keinen Kontakt zur Innenwand der Strebe 3a aufweist. Das Kunststoffmaterial der Kunststoffhülse 9 erleichtert das Einführen in die offene Stirnseite der Strebe 3a und minimiert das Risiko eines Verkantens oder Verklemmens. Zum Herstellen der Verbindung zwischen der Trägerstrebe 2 und der weiteren Strebe 3a wird zunächst die Schraube 6 in die Kunststoffhülse 9 eingeschraubt und das über die Kunststoffhülse 9 hinausstehende Ende der Schraube 6 in die Bohrung mit Innengewinde in der Wand der Trägerstrebe 2 eingeschraubt. Anschließend wird der von der Kunststoffhülse 9 und der Schraube 6 gebildete Steckzapfen 5 in die offene Stirnseite der Strebe 3a eingeführt.

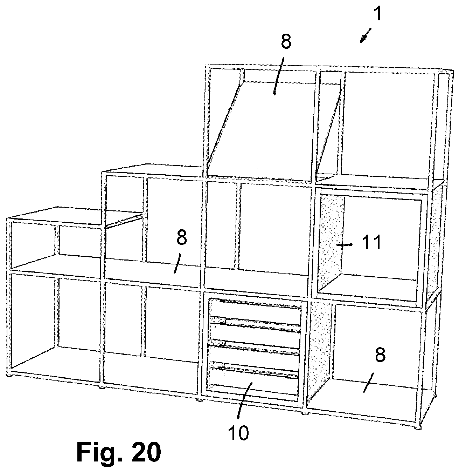

In Fig. 20 ist eine weitere Ausführungsvariante eines erfindungsgemäßes Regalsystems 1 dargestellt. Das Regalsystem 1 weist horizontal und vertikal eine Reihe von quadratischen Öffnungen auf. Im Regalsystem 1 befinden sich mehrere horizontal eingesetzt Fachböden 8, die sich zum Teil über eine und zum Teil über mehrere Öffnungen hinweg erstrecken. Außerdem ist ein Fachboden 8 in schräggestellter Position in eine quadratische Öffnung eingesetzt, was eine anschauliche Präsentation insbesondere von flachen Gegenständen ermöglicht, die auf den schräggestellten Fachboden 8 aufgelegt werden. In eine weitere Öffnung sind mehrere übereinanderliegende Schubladen 10 eingesetzt. In noch eine weitere Öffnung ist ein offener Einsatz 11 eingesetzt, der umlaufend geschlossene Seitenwände aufweist und nach vorne sowie nach hinten offen ausgebildet ist.

## Patentansprüche

1. Regalsystem mit Streben und mit Steckzapfen zum Verbinden der Streben, wobei zumindest ein Steckzapfen (5) an einer eine Trägerstrebe bildenden ersten Strebe (2) angeordnet und senkrecht zur Strebenlängsachse ausgerichtet ist, wobei mindestens eine zweite Strebe (3a bis 3c, 4a bis 4d) als Hohlstrebe ausgebildet ist und der Steckzapfen (5) in die Stirnseite der zweiten Strebe (3a bis 3c, 4a bis 4d) hineinragt, **dadurch gekennzeichnet,**
**dass** die zweite Strebe (3a bis 3c, 4a bis 4d) im Randbereich ihrer Stirnseite mit einer dritten Strebe (3a bis 3c, 4a bis 4d) einteilig verbunden ist, wobei die zweite und die dritte Strebe (3a bis 3c, 4a bis 4d) rechtwinklig zueinander stehen, wobei die zweite und die dritte Strebe (3a bis 3c, 4a bis 4d) durch teilweises Auftrennen und Biegen einer durchgehenden Hohlstrebe (3a bis 3c, 4a bis 4d) gefertigt sind, wobei die offenen Stirnseiten der Streben (3a bis 3c, 4a bis 4d) einander benachbart sind und in einem 90°-Winkel zueinander stehen.

2. Regalsystem nach Anspruch 1,
**dadurch gekennzeichnet,**
**dass** zumindest ein Steckzapfen (5) an einem Ende der Trägerstrebe (2) angeordnet ist.

3. Regalsystem nach Anspruch 1 oder 2,
**dadurch gekennzeichnet,**
**dass** zumindest ein Steckzapfen (5) mit Abstand zu den Enden der Trägerstrebe (2) angeordnet ist.

4. Regalsystem nach einem der Ansprüche 1 bis 3,
**dadurch gekennzeichnet,**
**dass** der Steckzapfen (5) über einen Gewindestift (6) mit der Trägerstrebe (2) verschraubbar ist, wobei der Gewindestift (6) sowohl in ein Innengewinde im Steckzapfen (5) als auch in ein Gewinde in der Trägerstrebe (2) einschraubbar ist.

5. Regalsystem nach einem der Ansprüche 1 bis 4,
**dadurch gekennzeichnet,**
**dass** das Regalsystem (1) mehrere übereinanderliegende Ebenen mit horizontal verlaufenden Streben (3b, 4b) aufweist, wobei die horizontalen Streben (4b) in der untersten Ebene Teil eines umlaufend geschlossenen, rechteckförmigen Rahmens sind.

6. Regalsystem nach Anspruch 5,
**dadurch gekennzeichnet,**
**dass** auf den umlaufend geschlossenen, rechteckförmigen Rahmen Streben (3a, 3c) aufsetzbar und verbindbar sind, die Teil eines offenen, U-förmigen Rahmens sind.

7. Regalsystem nach einem der Ansprüche 1 bis 6,
**dadurch gekennzeichnet,**
**dass** ein Teil oder sämtliche Streben (2, 3a bis 3c, 4a bis 4d) als Vierkantstreben ausgebildet sind.

8. Regalsystem nach einem der Ansprüche 1 bis 7,
**dadurch gekennzeichnet,**
**dass** ein Teil oder sämtliche Streben (2, 3a bis 3c, 4a bis 4d) aus Stahl gefertigt sind.

9. Regalsystem nach einem der Ansprüche 1 bis 8,
**dadurch gekennzeichnet,**
**dass** sämtliche Streben (2, 3a bis 3c, 4a bis 4d) als Hohlstreben ausgebildet sind.

10. Regalsystem nach einem der Ansprüche 1 bis 9,
**dadurch gekennzeichnet,**
**dass** sämtliche Streben (2, 3a bis 3c, 4a bis 4d), die nicht einteilig oder verschweißt verbunden sind, über die Steckzapfen (5) verbunden sind.

11. Regalsystem nach einem der Ansprüche 1 bis 10,
**dadurch gekennzeichnet,**
**dass** der Steckzapfen (5) eine Kunststoffhülse (9) und einen Gewindestift (6) oder eine Schraube (6) umfasst, wobei der Gewindestift (6) oder die Schraube (6) in die Kunststoffhülse (9) eingeschraubt ist.

12. Regalsystem nach Anspruch 11,
**dadurch gekennzeichnet,**
**dass** das über die Kunststoffhülse (9) hinausragende Ende des Gewindestifts (6) oder der Schraube (6) mit der Trägerstrebe (2) verschraubt ist.

## Claims

1. Rack system with struts and with plug-in connectors for connecting the struts, wherein at least one plug-in connector (5) is arranged on a first strut (2), the latter forming a carrier strut, and is oriented perpendicularly in relation to the longitudinal axis of the strut, wherein at least one second strut (3a to 3c, 4a to 4d) is designed in the form of a hollow strut and the plug-in connector (5) projects into the end side of the second strut (3a to 3c, 4a to 4d),
**characterized**
**in that**, in the edge region of its end side, the second strut (3a to 3c, 4a to 4d) is connected in one piece to a third strut (3a to 3c, 4a to 4d), wherein the second and the third struts (3a to 3c, 4a to 4d) are positioned at right angles in relation to one another, wherein the second and third struts (3a to 3c, 4a to 4d) are manufactured by a continuous hollow strut (3a to 3c, 4a to 4d) being partially cut open and bent, wherein the open end sides of the struts (3a to 3c, 4a to 4d) are adjacent to one another and are positioned at an angle of 90° in relation to one another.

2. Rack system according to Claim 1,
**characterized**
**in that** at least one plug-in connector (5) is arranged at one end of the carrier strut (2).

3. Rack system according to Claim 1 or 2,
**characterized**
**in that** at least one plug-in connector (5) is arranged at a distance from the ends of the carrier strut (2).

4. Rack system according to one of Claims 1 to 3,
**characterized**
**in that** the plug-in connector (5) can be screw-connected to the carrier strut (2) via a threaded pin (6), wherein the threaded pin (6) can be screwed both into an internal thread in the plug-in connector (5) and into a thread in the carrier strut (2) .

5. Rack system according to one of Claims 1 to 4,
**characterized**
**in that** the rack system (1) has a number of planes which are located one above the other and comprise horizontally running struts (3b, 4b), wherein the horizontal struts (4b) in the lowermost plane are part of a rectangular frame which is closed all the way round.

6. Rack system according to Claim 5,
**characterized**
**in that** struts (3a, 3c) which are part of an open, U-shaped frame can be positioned, and connected, on the rectangular frame which is closed all the way round.

7. Rack system according to one of Claims 1 to 6,
**characterized**
**in that** some or all of the struts (2, 3a to 3c, 4a to 4d) are designed in the form of square struts.

8. Rack system according to one of Claims 1 to 7,
**characterized**
**in that** some or all of the struts (2, 3a to 3c, 4a to 4d) are manufactured from steel.

9. Rack system according to one of Claims 1 to 8,
**characterized**
**in that** all of the struts (2, 3a to 3c, 4a to 4d) are designed in the frame of hollow struts.

10. Rack system according to one of Claims 1 to 9,
**characterized**
**in that** all of the struts (2, 3a to 3c, 4a to 4d) which are not connected in one piece or welded are connected via the plug-in connectors (5).

11. Rack system according to one of Claims 1 to 10,
**characterized**
**in that** the plug-in connector (5) comprises a plastic sleeve (9) and a threaded pin (6) or a screw (6), the threaded pin (6) or the screw (6) having been screwed into the plastic sleeve (9).

12. Rack system according to Claim 11,
**characterized**
**in that** that end of the threaded pin (6) or of the screw (6) which projects beyond the plastic sleeve (9) is screw-connected to the carrier strut (2).

## Revendications

1. Système d'étagères comprenant des entretoises et comprenant des tenons à emboîter pour relier les entretoises, au moins un tenon à emboîter (5) étant agencé sur une première entretoise (2) formant une entretoise porteuse et étant orienté perpendiculairement à l'axe longitudinal de l'entretoise, au moins une deuxième entretoise (3a à 3c, 4a à 4d) étant configurée sous forme d'entretoise creuse et le tenon à emboîter (5) pénétrant dans le côté frontal de la deuxième entretoise (3a à 3c, 4a à 4d), **caractérisé en ce que**
la deuxième entretoise (3a à 3c, 4a à 4d) est reliée d'un seul tenant, dans la zone de bord de son côté frontal, à une troisième entretoise (3a à 3c, 4a à 4d), la deuxième et la troisième entretoises (3a à 3c, 4a à 4d) étant à angle droit l'une de l'autre, la deuxième et la troisième entretoises (3a à 3c, 4a à 4d) étant fabriquées par sectionnement partiel et pliage d'une entretoise creuse continue (3a à 3c, 4a à 4d), les côtés frontaux ouverts des entretoises (3a à 3c, 4a à 4d) étant voisins l'un de l'autre et étant à un angle de 90° l'un de l'autre.

2. Système d'étagères selon la revendication 1, **caractérisé en ce qu'**au moins un tenon à emboîter (5) est agencé à une extrémité de l'entretoise porteuse (2).

3. Système d'étagères selon la revendication 1 ou 2, **caractérisé en ce qu'**au moins un tenon à emboîter (5) est agencé à distance des extrémités de l'entretoise porteuse (2) .

4. Système d'étagères selon l'une quelconque des revendications 1 à 3, **caractérisé en ce que** le tenon à emboîter (5) peut être vissé à l'entretoise porteuse (2) par l'intermédiaire d'une tige filetée (6), la tige filetée (6) pouvant être vissée aussi bien dans un filetage intérieur dans le tenon à emboîter (5) que dans un filetage dans l'entretoise porteuse (2).

5. Système d'étagères selon l'une quelconque des revendications 1 à 4, **caractérisé en ce que** le système d'étagères (1) présente plusieurs niveaux superposés avec des entretoises (3b, 4b) s'étendant horizontalement, les entretoises horizontales (4b) faisant partie, dans le niveau le plus bas, d'un cadre rectangulaire fermé sur la périphérie.

6. Système d'étagères selon la revendication 5, **caractérisé en ce que** des entretoises (3a, 3c), qui font partie d'un cadre ouvert en forme de U, peuvent être placées et reliées sur le cadre rectangulaire fermé sur la périphérie.

7. Système d'étagères selon l'une quelconque des revendications 1 à 6, **caractérisé en ce qu'**une partie ou la totalité des entretoises (2, 3a à 3c, 4a à 4d) sont configurées sous forme d'entretoises quadrangulaires.

8. Système d'étagères selon l'une quelconque des revendications 1 à 7, **caractérisé en ce qu'**une partie ou la totalité des entretoises (2, 3a à 3c, 4a à 4d) sont fabriquées en acier.

9. Système d'étagères selon l'une quelconque des revendications 1 à 8, **caractérisé en ce que** la totalité des entretoises (2, 3a à 3c, 4a à 4d) sont configurées sous forme d'entretoises creuses.

10. Système d'étagères selon l'une quelconque des revendications 1 à 9, **caractérisé en ce que** la totalité des entretoises (2, 3a a 3c, 4a a 4d) qui ne sont pas reliées d'un seul tenant ou par soudage, sont reliées par l'intermédiaire des tenons à emboîter (5).

11. Système d'étagères selon l'une quelconque des revendications 1 à 10, **caractérisé en ce que** le tenon à emboîter (5) comprend un manchon en matière plastique (9) et une tige filetée (6) ou une vis (6), la tige filetée (6) ou la vis (6) étant vissée dans le manchon en matière plastique (9).

12. Système d'étagères selon la revendication 11, **caractérisé en ce que** l'extrémité de la tige filetée (6) ou de la vis (6) qui dépasse du manchon en matière plastique (9) est vissée à l'entretoise porteuse (2).
